# EUROPÄISCHE PATENTSCHRIFT

(11) **EP 3 143 466 B1**
(45) Veröffentlichungstag und Bekanntmachung des Hinweises auf die Patenterteilung: **11.02.2026**
(21) Anmeldenummer: 15721240.8
(22) Anmeldetag: 08.05.2015
(51) Int. Cl.: G05B 19/418

(54) **FELDGERÄT, VERFAHREN ZUM BETREIBEN EINES FELDGERÄTES UND CLOUD-DIENST**
FIELD DEVICE, METHOD FOR OPERATING A FIELD DEVICE AND CLOUD SERVICE
APPAREIL DE TERRAIN, PROCÉDÉ POUR FAIRE FONCTIONNER UN APPAREIL DE TERRAIN ET SERVICE EN NUAGE

(30) Priorität: 12.05.2014 DE 102014106632
(43) Veröffentlichungstag der Anmeldung: 22.03.2017
(73) Patentinhaber: Krohne Messtechnik GmbH, 47058 Duisburg (DE)
(72) Erfinder: HANSEN, Christian, 45529 Hattingen (DE); SPIEGEL, Christoph, 46049 Oberhausen (DE)
(74) Vertreter: Gesthuysen Patentanwälte
(86) Internationale Anmeldenummer: PCT/EP2015/060213
(87) Internationale Veröffentlichungsnummer: WO 2015/173147

(56) Entgegenhaltungen:
- EP-A1- 2 293 164
- WO-A1-2013/101186
- DE-A1- 102010 029 952
- DE-A1- 102011 007 199
- DE-A1- 102011 078 030
- DE-T2- 69 717 838
- US-A1- 2005 120 070
- US-A1- 2007 161 367
- US-A1- 2013 138 818
- US-A1- 2013 211 546
- US-A1- 2013 211 547
- US-A1- 2013 211 555
- US-A1- 2013 211 559
- US-B1- 7 539 724
- GIVEHCHI OMID ET AL: "Cloud computing for industrial automation systems - A comprehensive over", 2013 IEEE 18TH CONFERENCE ON EMERGING TECHNOLOGIES & FACTORY AUTOMATION (ETFA), IEEE, 10 September 2013 (2013-09-10), pages 1 - 4, XP032517041, ISSN: 1946-0740, [retrieved on 20131024], DOI: 10.1109/ETFA.2013.6648080

## Beschreibung

Die Erfindung betrifft ein Feldgerät. Weiterhin bezieht sich die Erfindung auf ein Verfahren zum Betreiben eines Feldgerätes. Schließlich bezieht sich die Erfindung auch auf einen Cloud-Dienst.

In der modernden Prozessautomatisierung ist es üblich, Prozesse oder Medien durch Feldgeräte in Form von Messgeräten (Sensoren) zu überwachen bzw. in Form von Stellgliedern (Aktoren) zu beeinflussen.

Für die Verwaltung der Prozesse sind die Feldgeräte in aller Regel mit einer Leitwarte verbunden, die Teil eines Prozessleitsystems ist. Hierfür werden oft sogenannte Feldbusse mit entsprechenden Protokollen verwendet (z. B. EtherNet/IP, PROFINET, Modbus TCP, Foundation Fieldbus (FF), Profibus DP oder PA, Modbus RTU).

Hierdurch werden Daten von den Feldgeräten an die Leitwarte übertragen bzw. erhalten die Feldgeräte Daten, z. B. Parameterwerte oder Softwarekomponenten usw. von der Leitwarte.

Dokument US2007161367A1 offenbart ein solches Feldgerät und ein Verfahren zum Betreiben eines Feldgeräts.

Ein Nachteil besteht darin, dass die Daten und Zugriffsmöglichkeiten in aller Regel auf das Prozessleitsystem beschränkt sind, in dem sich die Leitwarte und die Feldgeräte befinden. Außerhalb der Prozessanlage kann daher in der Regel nicht auf die Daten zugegriffen werden. Auch bei weit verteilten Feldgeräten ist teilweise nur der direkte Datenzugriff beim Feldgerät selbst möglich. Zu denken ist da an ein dezentrales Wasserversorgungsnetz.

Der Erfindung liegt daher die Aufgabe zugrunde, die Datenkommunikation mit Feldgeräten zu vereinfachen.

Mit Cloud wird eine bedarfsgesteuerte Bereitstellung von Datenverarbeitungsressourcen beliebiger Art bezeichnet, die es ermöglicht, Daten auf unterschiedlichen Einheiten verarbeiten bzw. ablegen zu können. Unter Cloud kann jedoch auch ein über ein Netzwerk, in dem sich zumindest das Feldgerät befindet, oder über das Internet erreichbarer Server (z. B. Fileserver, E-Mail-Server, Datenbankserver usw.) verstanden werden. Damit ist es beispielweise in einem Anwendungsfall möglich, flexibel die Rechenkapazität zu steigern, wenn aufwändigere Berechnungen usw. erforderlich sind. Weiterhin stehen so beispielsweise auch abgespeicherte Daten über unterschiedliche Wege und unterschiedliche Zugriffspunkte zur Verfügung.

Erfindungsgemäß ist eine Cloud-Schnittstelle vorhanden, über die Daten zwischen einer solchen Cloud und einem Feldgerät ausgetauscht werden können, d. h. über die das Feldgerät Daten ausgeben und/oder Daten empfangen kann.

Generell ist eine bidirektionale Datenübertragung zwischen Cloud und Feldgerät möglich. Die Datenübertragung kann dabei nach einem festen Schema oder beispielsweise infolge einer Abfrage erfolgen. Weiterhin kann eine reine Datenübertragung durch eine Bestätigung von der Empfangsseite ergänzt werden.

In einer Ausgestaltung verfügt das Feldgerät selbst über die Schnittstelle, die daher ein Bestandteil des Feldgerätes ist.

In einer alternativen Ausgestaltung verfügt das Feldgerät über eine Standardschnittstelle, die beispielsweise einen Anschluss an einen Feldbus gemäß dem Stand der Technik erlaubt. Die Cloud-Schnittstelle ist dabei ein Bestandteil einer separaten Kommunikationsvorrichtung, so dass das Feldgerät über die Standardschnittstelle mit der Kommunikationsvorrichtung und über die Cloud-Schnittstelle der Kommunikationsvorrichtung mit der Cloud kommuniziert. In dieser Ausgestaltung kann es sich daher beim Feldgerät auch um ein normales Feldgerät gemäß dem Stand der Technik handeln, das über eine gesonderte Kommunikationsvorrichtung mit der Cloud Daten austauscht.

Ist insbesondere das Feldgerät autark oder soll beispielsweise eine wiederholte Abfrage vermieden werden, so ist in einer Ausgestaltung vorgesehen, dass das Feldgerät nach einem vorgebbaren Zeit-Schema Daten an die Cloud übermittelt und/oder von der Cloud empfängt.

Das Zeit-Schema bezieht sich beispielsweise auf einen zeitlichen Abstand zwischen der Abgabe und/oder den Empfang der Daten. Insbesondere in Verbindung mit einer Echtzeituhrvorrichtung wird dem Feldgerät alternativ ein bestimmter Uhrzeitenplan vorgegeben.

Handelt es sich bei dem Feldgerät um ein Messgerät, so wird das Feldgerät entsprechend eine Messung starten, so dass zum passenden Zeitpunkt der Messwert oder ggf. auch mehrere Messwerte in Datenform übermittelt werden kann.

In einer Ausgestaltung ist in der Cloud ein Zeit-Schema hinterlegt, so dass die Cloud nach diesem Schema Abfragesignale an das Feldgerät und/oder an mehrere Feldgeräte sendet. Alternativ oder ergänzend ist das Zeit-Schema in mindestens einem Feldgerät abgespeichert, so dass das Feldgerät selbsttätig und ohne eine Abfrage von der Cloud Daten an die Cloud übermittelt.

Alternativ oder ergänzend werden in einer Ausgestaltung Abfragesignale außerhalb eines festen Zeit-Schemas an das Feldgerät bzw. an die Cloud übermittelt. Dies bezieht sich beispielweise auf eine manuelle Abfrage von Messwerten oder auf die Übertragung von Konfigurationsdaten oder beispielweise eines Firmware-Updates.

In einer Ausgestaltung ist vorgesehen, dass das Feldgerät zeitweise in einen Energiespar-Zustand übergeht. Hierbei werden beispielweise Komponenten nicht oder nur mit reduzierter Energie versorgt oder es werden Funktionalitäten nicht ausgeführt. Diese Ausgestaltung ist insbesondere vorteilhaft, wenn das Feldgerät beispielsweise nur über eine Batterie bzw. einen Akku oder allgemein nur über eine beschränkte eigene Energieversorgung, z. B. durch einen Energy-Harvester in Form eines Solarmoduls verfügt.

Gemäß einer Lehre wird die obige Aufgabe durch ein Verfahren zum Betreiben eines Feldgerätes nach Anspruch 1 gelöst.

Der Datenzugriff oder die Steuerung einer Prozessanlage, in der sich mindestens ein Feldgerät befindet, wird erfindungsgemäß dadurch vereinfacht, dass zwischen dem Feldgerät und einer Cloud Daten über eine Cloud-Schnittstelle kommuniziert werden.

Damit sichergestellt wird, dass das mindestens eine Feldgerät nur mit der richtigen Cloud kommuniziert, ist in einer Ausgestaltung ein Aktivierungsvorgang vorgesehen.

Dabei wird mindestens bei dem Aktivierungsvorgang von der Cloud mindestens ein Aktivierungscode an das Feldgerät übermittelt. Der Aktivierungscode beinhaltet vorzugsweise mindestens eine Information über die Cloud oder vorzugsweise auch über die Instanz, die die Cloud als Dienst zur Verfügung stellt.

Nach dem Empfangen des Aktivierungscodes, d. h. nachdem das Feldgerät durch den Aktivierungscode erfahren hat, dass eine Verbindung zwischen der den Aktivierungscode sendenden Cloud und dem Feldgerät erzeugt werden soll, wird von dem Feldgerät eine Verifizierung des empfangenen Aktivierungscodes ermöglicht.

Dies bedeutet in einer Ausgestaltung, dass das Feldgerät den Aktivierungscode oder eine daraus gewonnene Information auf einer Anzeigeeinheit darstellt. Die Anzeige wird von einem Benutzer im positiven Fall bestätigt, so dass das Feldgerät mit der betroffenen Cloud kommunizieren darf.

In einer weiteren Ausgestaltung wird ein Mechanismus beschrieben, durch den das Feldgerät dazu gebracht wird, Daten an die Cloud zu übermitteln.

Dabei ist vorgesehen, dass an das Feldgerät ein Abfragesignal übermittelt wird.

Das Abfragesignal kann dabei in einer Ausgestaltung als beliebig kurzes Datenpaket realisiert sein, da das Abfragesignal selbst keine Information übermittelt, sondern die Information an das Feldgerät im Erhalten eines solchen Abfragesignals besteht. Es reicht also, wenn eindeutig ist, dass es sich um ein solches Abfragesignal handelt

Infolge des empfangenen Abfragesignals wird in einer Ausgestaltung durch das Feldgerät von der Cloud eine Information abgefragt. Ausgehend von der entsprechend von der Cloud zurück übermittelten Information übermittelt das Feldgerät Daten an die Cloud. Das Feldgerät fragt also in dieser Ausgestaltung ab, welche Daten es an die Cloud übermitteln soll.

Alternativ werden von dem Feldgerät nach dem Empfang des Abfragesignals Daten an die Cloud übermittelt. Das Feldgerät reagiert also in dieser Ausgestaltung auf das Abfragesignal automatisch damit, dass es Daten an die Cloud übermittelt.

In einer weiteren alternativen Ausgestaltung ist vorgesehen, dass von dem Feldgerät nach dem Empfang des Abfragesignals Daten von der Cloud empfangen werden. In einer Variante reagiert das Feldgerät auf den Empfang des Abfragesignals dadurch, dass es eine Information von der Cloud abfragt und daraufhin von der Cloud die Information erhält, dass Daten, z. B. Konfigurationsdaten oder Softwareupdate, für das Feldgerät zum Herunterladen, d. h. für den Datenempfang bereit stehen. In einer alternativen Variante umfasst das Abfragesignal bereits diese Information bezüglich der neuen Daten für das Feldgerät, so dass das Feldgerät direkt im Anschluss an den Empfang des Abfragesignals die neuen Daten von der Cloud erhält bzw. abholt.

Bei den übermittelten Daten handelt es sich beispielsweise um Messwerte oder um Daten, die das Feldgerät oder dessen aktuellen Zustand genauer bezeichnen.

In einer Ausgestaltung wird der Empfang von Daten jeweils bestätigt bzw. quittiert. So ist in einer Variante vorgesehen, dass von der Cloud der Empfang von Daten dem Feldgerät bestätigt wird. In einer ergänzenden oder alternativen Variante ist vorgesehen, dass von dem Feldgerät der Cloud der Empfang von Daten bestätigt wird.

Eine Ausgestaltung besteht darin, dass ein Empfang von Daten bestätigt wird, indem mindestens ein Zeitpunkt für mindestens eine folgende Datenübermittlung übermittelt wird. In einer Ausgestaltung wird der Empfang von Daten dadurch bestätigt, dass mindestens ein neues Zeit-Schema übermittelt wird, wobei das Zeit-Schema aus mindestens einem Zeitpunkt besteht, zu dem eine folgende, d. h. nächste Datenübertragung stattfinden soll.

In einer Ausgestaltung ist vorgesehen, dass von der Cloud der Empfang von Daten dem Feldgerät bestätigt wird, indem dem Feldgerät ein Zeitpunkt für mindestens eine folgende Datenübermittlung von dem Feldgerät an die Cloud übermittelt wird, und/oder dass von dem Feldgerät der Cloud der Empfang von Daten bestätigt wird, indem der Cloud ein Zeitpunkt für mindestens eine folgende Datenübermittlung von der Cloud an das Feldgerät übermittelt wird.

In Bezug auf das Zeitschema, nach dem das Feldgerät selbsttätig Daten an die Cloud übermittelt, ist in einer Ausgestaltung vorgesehen, dass von der Cloud der Empfang von Daten dem Feldgerät bestätigt wird, indem dem Feldgerät ein Zeitpunkt für mindestens eine folgende Datenübermittlung von dem Feldgerät an die Cloud übermittelt wird. Der Datenempfang wird also dadurch quittiert, indem das Feldgerät einen Zeitpunkt für mindestens eine nächste Übermittlung von Daten an die Cloud erhält.

Alternativ oder ergänzend ist in einer Ausgestaltung vorgesehen, dass von dem Feldgerät der Cloud der Empfang von Daten bestätigt wird, indem der Cloud ein Zeitpunkt für mindestens eine folgende Datenübermittlung von der Cloud an das Feldgerät übermittelt wird.

In einer weiteren Ausgestaltung werden mehrere Zeitpunkte kommuniziert, beispielsweise indem der zeitliche Abstand zwischen einer vorgebbaren Anzahl von aufeinanderfolgenden Datenübertragungen mitgeteilt wird.

Gemäß einer weiteren Lehre wird die obige Aufgabe gelöst durch einen Cloud-Dienst, über den eine Datenkommunikation mit mindestens einem Feldgerät realisiert wird.

Die Datenkommunikation wird also erfindungsgemäß dadurch realisiert, dass eine entsprechende Cloud bzw. ein Cloud-Dienst bereitgestellt wird, über den die Datenkommunikation mit mindestens einem Feldgerät stattfindet. Es wird also durch entsprechende Recheneinheiten bzw. Speichereinheiten, die in einer Ausgestaltung auch Teil der Recheneinheiten sind, ein Cloud-Dienst angeboten, über den mindestens ein Feldgerät angesprochen werden bzw. an den mindestens ein Feldgerät seine Daten übermitteln kann.

Der Cloud-Dienst wird dabei in einer Ausgestaltung durch Komponenten des Nutzers bereitgestellt und wird in einer alternativen Ausgestaltung als externe Dienstleistung angeboten.

Die obigen Ausführungen bezüglich des Feldgerätes bzw. des Verfahrens und die dort genannten Vorteile gelten entsprechend auch für den Cloud-Dienst bzw. lassen sich über diesen umsetzen.

In einer Ausgestaltung ist das mindestens eine Feldgerät mit der Cloud Teil einer Prozessanlage.

Im Einzelnen gibt es nun eine Vielzahl von Möglichkeiten, das erfindungsgemäße Verfahren auszugestalten und weiterzubilden. Dazu wird verwiesen auf die den Patentanspruch 1 nachgeordneten Patentansprüche**.**

In der Zeichnung zeigen
- Fig. 1: eine schematische Darstellung einer Prozessanlage,
- Fig. 2: eine schematische Darstellung einer Prozessanlage in einer alternativen Ausgestaltung,
- Fig. 3: eine Ausgestaltung eines Ablaufs einer Kommunikation zwischen einem Feldgerät und einer Cloud als Diagramm und
- Fig. 4: eine Ausgestaltung eines sich an den Ablauf der Fig. 3 anschließenden Verfahrensablaufs.

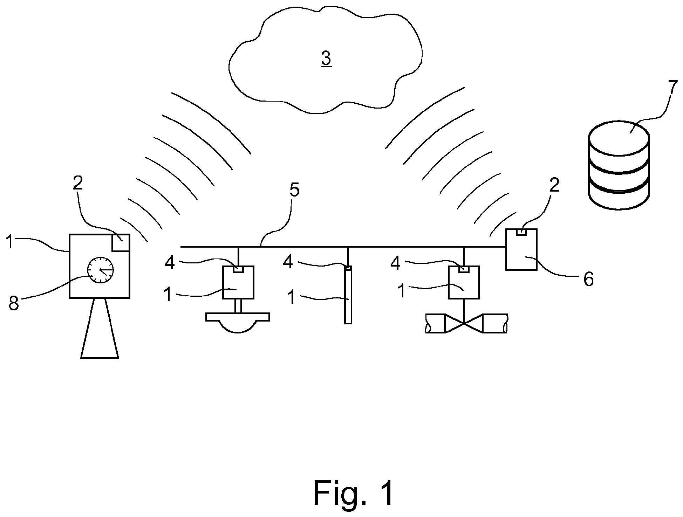

In der Fig. 1 ist stark schematisch eine Prozessanlage gezeigt, in der mehrere Feldgeräte 1 vorhanden sind. Dies ist jedoch nur ein Ausführungsbeispiel, da die Erfindung sich auch mit nur einem Feldgerät 1 realisieren lässt. Dabei handelt es sich teilweise um Messgeräte (für Füllstand, Durchfluss bzw. den pH-Wert) und in einem Fall um ein Stellglied in Form eines Ventils.

Das separat angeordnete Feldgerät 1 zur Füllstandsbestimmung ist mit einer eigenen Cloud-Schnittstelle 2 versehen, die eine Kommunikation mit einer Cloud 3 ermöglicht.

Die Datenübermittlung findet in der gezeigten Ausgestaltung kabellos, also z. B. über Funk statt. Alternativ handelt es sich bei der Cloud-Schnittstelle um eine Ethernet-basierte Schnittstelle oder um eine Schnittstelle zu einem Datendienst des zellularen Mobilfunks (z. B. GPRS - für General Packet Radio Service - oder HSPA für High Speed Packet Access).

Die anderen Feldgeräte 1 verfügen über eine Standardschnittstelle 4 zur Verbindung über einen Feldbus 5 mit einer Kommunikationsvorrichtung 6. Die Kommunikationsvorrichtung 6 weist eine Cloud-Schnittstelle 2 auf und ermöglicht daher im Sinne eines Gateway den über den Feldbus 5 mit ihr verbundenen Feldgeräten 1 die Kommunikation mit der Cloud 3.

Die Cloud 3 wird durch eine Rechenvorrichtung 7 realisiert, die den entsprechenden Cloud-Dienst zur Verfügung stellt. Die Rechenvorrichtung 7 ist dabei in der gezeigten Ausgestaltung ein Bestandteil der Prozessanlage selbst.

In einer alternativen - nicht dargestellten - Ausgestaltung wird die Rechenvorrichtung 7 von einer externen Instanz betrieben, die Cloud-Dienste anbietet.

Die Feldgeräte 1 verfügen über Echtzeituhrvorrichtungen 8, die es erlauben, die zu versendenden Daten mit einem Zeitstempel zu versehen, und außerdem die Messung und/oder die Datenübertragung zu zuvor festgelegten Zeitpunkten durchzuführen.

Eine Synchronisierung der Daten der Feldgeräte 1 wird in Verbindung mit dem Cloud-Dienst beispielsweise mithilfe einer Technik wie dem Network Time Protocol (NTP) mit einer Referenzuhrzeit vorgenommen.

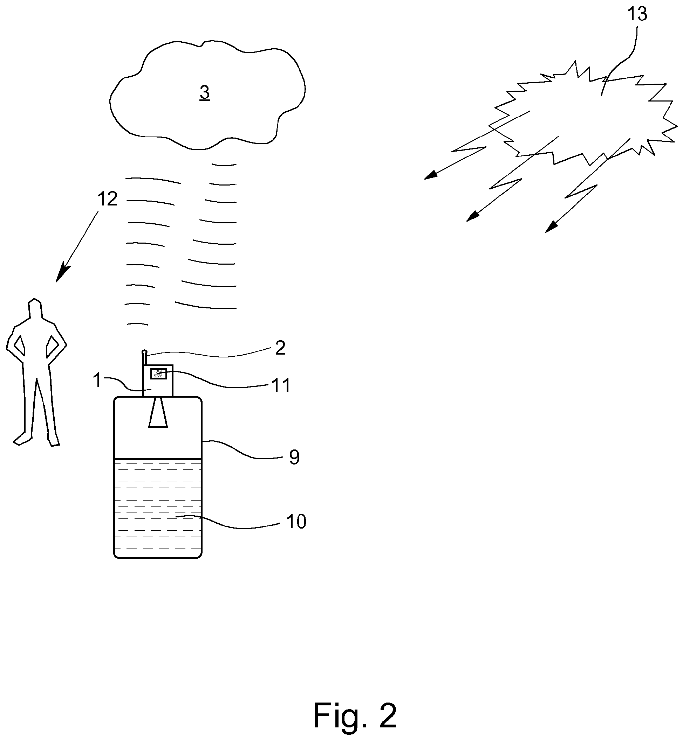

In der Fig. 2 wird ein Aktivierungsvorgang eines Feldgeräts 1 schematisch dargestellt.

Das Feldgerät 1 ist dabei an der Oberseite eines Behälters 9 befestigt und ist als Messgerät zur Bestimmung des Füllstands des Mediums 10 ausgestaltet.

Für eine erste Verbindung zwischen Feldgerät 1 und Cloud 3 übermittelt die Cloud 3 einen Aktivierungscode an das Feldgerät 1. Dies geschieht hier über eine Funkverbindung und die Cloud-Schnittstelle 2.

Auf dem Feldgerät 1 wird der Aktivierungscode über eine Anzeige-/EingabeVorrichtung 11 in Form eines Human-Machine-Interface dargestellt. Von einem Benutzer 12 wird der Code verifiziert und das Feldgerät 1 für die Kommunikation mit der Cloud 3 freigeschaltet.

Indem nur die Verbindung mit einer bekannten Cloud 3 erlaubt wird, wird verhindert, dass z. B. eine Abhör-Cloud 13 einen Kontakt startet und dass dadurch Daten an einen falschen Empfänger geraten.

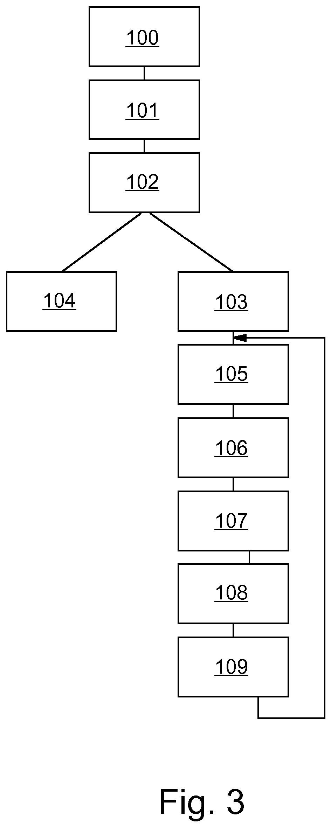

In der Fig. 3 ist beispielhaft ein Ablauf der Kommunikation zwischen einem Feldgerät, der als Sensor dient, und einer Cloud dargestellt.

Im Schritt 100 wird das Feldgerät an einem Messort angebracht. In einem ggf. vorgesehenen weiteren Schritt wird das Feldgerät beispielsweise anhand einer eindeutigen Kennung (z. B. Rufnummer der verwendeten SIM-Karte, Seriennummer) der Cloud hinzugefügt bzw. bekannt gemacht.

Im Schritt 101 erhält das Feldgerät ausgehend von der Cloud einen Aktivierungscode, der die spezielle Cloud kennzeichnet und identifiziert. Dies geschieht beispielsweise in Form einer SMS.

Der Aktivierungscode wird durch einen Benutzer oder durch das ServicePersonal im Schritt 102 verifiziert, so dass im positiven Fall ab dem Schritt 103 das Feldgerät mit der Cloud kommuniziert.

In dem Fall, dass der Aktivierungscode nicht von einer erlaubten Cloud stammt, wird die Verbindung verweigert, wobei hier im Schritt 104 insbesondere eine derartige Signalisierung erzeugt wird, dass eine nicht zulässige Verbindung versucht worden ist.

Im Schritt 105 geht das Feldgerät in einen Energiespar-Modus über, indem beispielsweise insbesondere die der Messung dienenden Komponenten des Feldgeräts nicht mit Energie versorgt werden.

Im Schritt 106 geht das Feldgerät ausgehend von einem im Feldgerät hinterlegten Zeitschema in den Messzustand über und ermittelt einen Messwert.

Dieser Messwert wird dabei im Schritt 107 als Rohwert an die Cloud übermittelt, die aus dem Rohwert im Schritt 108 den eigentlichen Wert für die Prozessgröße ermittelt.

Weiterhin werden in der Cloud auch die Messdaten von mehreren Feldgeräten zentral verwaltet und vorzugsweise auch abgespeichert.

Im Schritt 109 übermittelt die Cloud ein Bestätigungssignal als Quittierung für den Messwert an das Feldgerät, woraufhin das Feldgerät wieder im Schritt 105 in den Energiespar-Zustand übergeht.

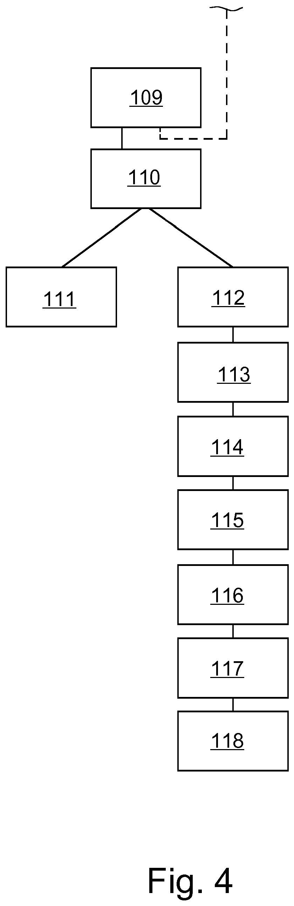

In der Fig. 4 ist eine alternative Fallsituation dargestellt, in der ein Bedarf an einem Messwert außerhalb des im Feldgerät hinterlegten Zeitschemas besteht.

Hierfür wird, um einen aktuellen Messwert zu erhalten, dem Feldgerät nach dem Schritt 109 im Schritt 110 ein Abfragesignal übermittelt.

Das Abfragesignal fällt dabei in der gezeigten Ausgestaltung in eine von zwei möglichen Kategorien, die jeweils eine von zwei Abfolgen auslösen.

Das Abfragesignal führt in einem Fall dazu, dass das Feldgerät im Schritt 111 automatisch einen Messwert erzeugt und ihn an die Cloud übermittelt.

Im alternativen Fall fragt das Feldgerät im Schritt 112 bei der Cloud nach, welche Messdaten oder welche Informationen benötigt werden.

Im Schritt 113 übermittelt die Cloud einen entsprechenden Auftrag an das Feldgerät, der dann im Schritt 114 von dem Feldgerät ausgeführt wird.

In der gezeigten Ausgestaltung wird im Schritt 115 von der Cloud dem Feldgerät der nächste Zeitpunkt für das Übersenden eines Messwerts übermittelt. Das bedeutete, dass für die folgenden Schritte das Zeitschema auf einen Zeitpunkt und zwar jeweils für die nächste Messung reduziert wird.

Entsprechend geht das Feldgerät im Schritt 116 in den Energiespar-Zustand über, um im Schritt 117 den Messwert zu erzeugen und ihn an die Cloud zu übermitteln.

Als Bestätigung erhält das Feldgerät im Schritt 118 von der Cloud den nächsten Zeitpunkt für die Übermittelung bzw. damit ggf. auch für die Erzeugung des Messwerts. Die Zeitpunkte für die Erfassung des Messwerts und die Datenübertagung können dabei unterschiedlich sein. So ist in einer Ausgestaltung vorgesehen, dass das Feldgerät eine vorgebbare Anzahl von Messwerten erfasst und dann gesammelt überträgt.

## Patentansprüche

1. Verfahren zum Betreiben eines Feldgerätes (1), wobei zwischen dem Feldgerät (1) und einer Cloud (3) über eine Cloud-Schnittstelle (2) Daten kommuniziert werden,
**dadurch gekennzeichnet,**
**dass** mindestens bei einem Aktivierungsvorgang von der Cloud (3) mindestens ein Aktivierungscode an das Feldgerät (1) übermittelt wird, dass nach dem Empfang des Aktivierungscodes von dem Feldgerät (1) eine Verifizierung des empfangenen Aktivierungscodes ermöglicht wird und dass nach einer erfolgreichen Verifizierung das Feldgerät (1) mit der Cloud (3) kommuniziert.

2. Verfahren nach Anspruch 1, **dadurch gekennzeichnet, dass** an das Feldgerät (1) ein Abfragesignal übermittelt wird, dass durch das Feldgerät (1) nach dem Empfang des Abfragesignals von der Cloud (3) eine Information abgefragt wird und von dem Feldgerät (1) ausgehend von der Information Daten an die Cloud (3) übermittelt werden oder dass von dem Feldgerät (1) nach dem Empfang des Abfragesignals Daten an die Cloud (3) übermittelt werden oder dass von dem Feldgerät (1) nach dem Empfang des Abfragesignals Daten von der Cloud (3) empfangen werden.

3. Verfahren nach Anspruch 1 oder 2, **dadurch gekennzeichnet, dass** von der Cloud (3) der Empfang von Daten dem Feldgerät (1) bestätigt wird und/oder dass von dem Feldgerät (1) der Cloud (3) der Empfang von Daten bestätigt wird.

4. Verfahren nach Anspruch 3, **dadurch gekennzeichnet, dass** ein Empfang von Daten bestätigt wird, indem mindestens ein Zeitpunkt für mindestens eine folgende Datenübermittlung übermittelt wird.

## Claims

1. Method for operating a field device (1), wherein data is communicated between the field device (1) and a cloud (3) via a cloud interface (2),
**characterized in**
**that** at least one activation code is transmitted from the cloud (3) to the field device (1) during at least one activation process, that after the field device (1) receives the activation code, verification of the received activation code is enabled, and that after successful verification, the field device (1) communicates with the cloud (3).

2. Method according to claim 1, **characterized in that** a query signal is transmitted to the field device (1), that after receipt of the query signal from the cloud (3), information is queried by the field device (1) and data is transmitted from the field device (1) to the cloud (3) based on the information, or that data is transmitted from the field device (1) to the cloud (3) after receiving the query signal, or that data is received from the cloud (3) by the field device (1) after receiving the query signal.

3. Method according to claim 1 or 2, **characterized in that** the cloud (3) confirms the receipt of data to the field device (1) and/or that the field device (1) confirms the receipt of data to the cloud (3).

4. Method according to claim 3, **characterized in that** receipt of data is confirmed by transmitting at least one point in time for at least one subsequent data transmission.

## Revendications

1. Procédé pour faire fonctionner un appareil de terrain (1), dans lequel des données sont communiquées entre l'appareil de terrain (1) et un nuage (3) par l'intermédiaire d'une interface de nuage (2).
**caractérisé**
**en ce qu'**au moins un code d'activation est transmis du nuage (3) à l'appareil de terrain (1) au moins lors d'un processus d'activation, **en ce qu'**une vérification du code d'activation reçu est rendue possible après réception du code d'activation en provenance de l'appareil de terrain (1) et **en ce que** l'appareil de terrain (1) communique avec le nuage (3) après une vérification réussie.

2. Procédé selon la revendication 1, **caractérisé en ce qu'**un signal de demande est transmis à l'appareil de terrain (1), **en ce que** des informations sont demandées par l'appareil de terrain (1) après réception du signal de demande en provenance du nuage (3) et **en ce que** des données sont transmises de l'appareil de terrain (1) au nuage (3) sur la base desdites informations, ou **en ce que** des données sont transmises de l'appareil de terrain (1) au nuage (3) après réception du signal de demande, ou **en ce que** les données sont reçues en provenance du nuage (3) par l'appareil de terrain (1) après réception du signal de demande.

3. Procédé selon la revendication 1 ou 2, **caractérisé en ce que** la réception de données est confirmée au dispositif de terrain (1) par le nuage (3) et/ou **en ce que** la réception de données est confirmée au nuage (3) par le dispositif de terrain (1).

4. Procédé selon la revendication 3, **caractérisé en ce que** la réception de données est confirmée en transmettant au moins un instant pour au moins une transmission de données suivante.
